# EUROPÄISCHE PATENTANMELDUNG

(11) **EP 2 557 527 A2**
(43) Veröffentlichungstag der Anmeldung: **13.02.2013**
(21) Anmeldenummer: 12176654.7
(22) Anmeldetag: 17.07.2012
(51) Int. Cl.: G06K 9/00

(54) **Manipulation repetitiver Strukturen in anzeigenden Videosystemen**

(30) Priorität: 10.08.2011 DE 102011080718
(71) Anmelder: ROBERT BOSCH GMBH, 70442 Stuttgart (DE)
(72) Erfinder: Schneider, Marcus, 71642 Ludwigsburg (DE); Niemz, Volker, 71277 Rutesheim (DE)

(57) **Zusammenfassung**

Die Erfindung bezieht sich auf ein Verfahren und eine Vorrichtung zur Erhöhung der Aufmerksamkeit eines Anwenders eines bildgebenden Assistenzsystems, insbesondere für Anwendungen in einem Fahrzeug (10). Das Verfahren umfasst das Erfassen der Umgebung des Fahrzeugs (10), das Erkennen und Bewerten von strukturlosen und/oder einfarbigen Bildbereichen (25) in den erfassten Bildern und das Manipulieren der strukturlosen Bildbereiche (25) durch Überlagern von leicht erfassbaren Strukturen (24), wenn deren Bewertung über einem Grenzwert liegt.

## Beschreibung

Die Erfindung bezieht sich auf ein Verfahren zur Erhöhung der Aufmerksamkeit eines Anwenders eines bildgebenden Assistenzsystems, insbesondere für Anwendungen in einem Fahrzeug, sowie eine Vorrichtung zum Durchführen des Verfahrens.

### Stand der Technik

Im Automobilbereich werden verschiedene bildgebende Assistenzsysteme eingesetzt, um dem Fahrer beim Navigieren im nahen Umfeld zu helfen. Diese Systeme sind beispielsweise als Rückfahrkamera realisiert, die mit einer im Heck des Fahrzeugs angebrachten Kamera ein Bild der Umgebung des Fahrzeugs erfassen und auf einem Monitor darstellen. Das Assistenzsystem erleichtert dem Fahrer die rückwärtige Umgebung wahrzunehmen und ermöglicht eine Sicht nach hinten ohne Verrenkungen und erhöht dadurch die Bequemlichkeit des Fahrers. Andere bildgebende Assistenzsysteme sind mit mehreren Kameras ausgerüstet, unter anderem an der Front und an den Seiten des Fahrzeugs, und gestatten dem Fahrer auf einfache Weise eine Rundumsicht. Ferner können die Kameras auch in einer leicht erhöhten Position angebracht sein, um dem Fahrer einen besseren Überblick über die Situationen in der Umgebung des Fahrzeugs zu ermöglichen. Die genannten Systemen weisen als gemeinsames Merkmal das Visualisieren der tatsächlichen Umgebung auf einem Monitor auf.

Aus der DE 10 2005 045 017 A1 ist ein Fahrerassistenzsystem bekannt, bei dem die Umgebung des Fahrzeugs mit verschiedenen Sensoren und Kameras erfasst wird. Eine Kamera ist dabei auf die vor dem Fahrzeug liegende Fahrbahn gerichtet. Durch eine Auswertung des Videobilds werden freie Bereiche der Fahrbahn erkannt, um das Vorhandensein von Hindernissen auszuschließen. Für die Erkennung freier Bereiche der Fahrbahn kommen eine Histogrammanalyse, der Vergleich verschiedener Bildbereiche, Detektion von Kanten sowie Regionen basierende Algorithmen zum Einsatz. Die Information, ob die Fahrbahn frei ist, kann dann beispielsweise von einem adaptiven Cruise Control-Fahrerassistenzsystem in einer Stop and Go Situation zum automatischen Anfahren des Fahrzeugs verwendet werden.

Anwender der genannten Systeme verlassen sich zunehmend auf diese und im Falle eines bildgebenden Assistenzsystems werden die auf dem Monitor dargestellten Bilder zunehmend als Schnittstelle zur Realität verwendet. Das Assistenzsystem muss deswegen eine intuitive Erfassbarkeit des Bildes garantieren können. Bewegt sich beispielsweise das Fahrzeug auf einer Straße deren Belag wenig Struktur und keine Farbunterschiede aufweist, kann, sofern das auf dem Monitor dargestellte Bild außer der Straße keine weiteren Strukturen aufweist, beim Fahrer der Eindruck entstehen, dass das Fahrzeug in Wirklichkeit stillstünde, oder dass das Kamerasystem ein Defekt aufweist. Ein intuitives Erfassen der korrekten Fahrsituation ist in diesem Fall nicht gegeben.

### Offenbarung der Erfindung

Ein Aspekt der Erfindung ist es, ein Verfahren zur Erhöhung der Aufmerksamkeit eines Anwenders eines bildgebenden Assistenzsystems, insbesondere für Anwendungen in einem Fahrzeug, bereitzustellen, folgende Schritte umfassend:
a) Erfassen von Bildern der Umgebung des Fahrzeugs,
b) Erkennen und Bewerten von strukturlosen und/oder einfarbigen Bildbereichen in den erfassten Bildern,
c) Manipulieren der strukturlosen Bildbereiche durch Überlagern von leicht erfassbaren Strukturen, wenn deren Bewertung über einem Grenzwert liegt.

Die Bilder der Umgebung des Fahrzeugs werden bevorzugt mit Kameras erfasst, die beispielsweise am Heck, an den Seiten und/oder an der Front des Fahrzeugs angebracht sein können. In den erfassten Bildern werden mithilfe eines oder mehrerer verschiedener Erkennungsverfahren strukturlose und/oder einfarbige Bildbereiche erkannt und bewertet. Je weniger Strukturen ein Bildbereich aufweist bzw. je weniger Farbunterschiede ein Bildbereich aufweist, desto größer ist dessen Bewertung. Überschreitet die Bewertung eines Bildbereichs einen vorgegebenen Grenzwert, wird dem Bildbereich eine leicht erfassbare Struktur überlagert. Das so erhaltene Bild wird auf einem Monitor dargestellt.

Das Erkennen der strukturlosen Bildbereiche kann dabei beispielsweise mittels Histogrammanalyse, Kantendetektion, Vergleichen verschiedener Bildbereiche und/oder Regionen-basierenden Algorithmen erfolgen. Ein Beispiel für einen Regionen-basierenden Algorithmus ist der Region Growing Algorithmus. Bei diesem Algorithmus werden zunächst ein oder mehrere Startpunkte im Bild ausgewählt. Beispielsweise kann die Mitte des Bildes als Startpunkt verwendet werden oder es können gleichmäßig übers Bild verteilt Startpunkte ausgewählt werden. An den Startpunkten werden die Eigenschaften des Bildpunktes wie Farbe und/oder Helligkeit bestimmt und ausgehend von diesen Startpunkten werden benachbarte Bildpunkte mit ähnlichen Eigenschaften zu einer Region zusammengefasst. Diese Regionen werden dann nach und nach in alle Richtungen erweitert, bis alle Bildpunkte mit ähnlichen Eigenschaften zu Regionen verbunden wurden.

Bei Algorithmen die verschiedene Bildbereiche miteinander vergleichen, kann der Vergleich beispielsweise durch die Einteilung des Bildes in ein Raster erfolgen, wobei die Ähnlichkeit zwischen den einzelnen Rasterfeldern miteinander verglichen wird. Bei den vergleichenden Verfahren ist es auch möglich, verschiedene zeitlich aufeinanderfolgende Bilder miteinander zu vergleichen, um Bewegungen zu erkennen oder das Bildrauschen zu minimieren. Das Bildrauschen kann unter Umständen ähnliche Eigenschaften wie Strukturen im Bild aufweisen, da es aber keinen Bezug zur Umgebung des Fahrzeugs aufweist, ist das Bildrauschen unerwünscht und wird bevorzugt unterdrückt.

Bei der Kantendetektion werden Kontrastübergänge zwischen verschiedenen Bildbereichen erkannt. Dies kann beispielsweise durch zeilenweise und/oder spaltenweise Analyse des Kamerabildes erfolgen. Dabei werden die einzelnen Bildpunkte der Reihe nach analysiert und starke Änderungen in der Farbe oder Bildhelligkeit als Bildkante interpretiert. Bildbereiche mit einer großen Anzahl von Kontrastübergängen deuten auf strukturreiche Bildbereiche hin, Bildbereiche mit einer geringen Anzahl von Kontrastübergängen werden als strukturarm bewertet.

Eine weitere Möglichkeit zur Suche strukturarmer Bildbereiche stellt die Histogrammanalyse dar. Bei der Histogrammanalyse wird das Bild in Zeilen, Spalten und/oder in Rasterfelder aufgeteilt. Anschließend wird für jeden so eingeteilten Bildteil ein Histogramm erstellt. Bei der Erstellung des Histogramms wird für jeden möglichen Helligkeitswert und/oder jeden möglichen Farbwert die Anzahl der Bildpunkte ermittelt, die diese Helligkeit bzw. Farbe aufweisen. In einem nächsten Schritt wird die Verteilung der einzelnen Bildpunkte auf die möglichen Farb- bzw. Helligkeitswerte analysiert. Ein Bildteil der sehr viele Strukturen oder Farbübergänge aufweist, zeichnet sich durch ein Histogramm aus, bei dem sehr viele verschiedene Farb- bzw. Helligkeitswerte vorkommen. Bei einem strukturlosen und/oder einfarbigen Bildbereich werden nur sehr wenige verschiedene Helligkeits- und/oder Farbwerte angenommen, die in dem Histogramm als Häufungen sichtbar sind. Eine Häufung weniger einzelner Farb- bzw. Helligkeitswerte führt somit zu einer hohen Bewertung des Bildbereichs, eine gleichmäßige Verteilung zu einer niedrigen Bewertung des betreffenden Bildbereichs.

Einem strukturlosen Bildbereich, dessen Bewertung über einem Grenzwert liegt, werden leicht erfassbare Strukturen überlagert. Der Grenzwert, ab dem eine Manipulation des Bildes erfolgt, ist in einer bevorzugten Ausführungsform der Erfindung durch den Anwender einstellbar. Damit lässt sich das Verfahren auf die individuellen Sehgewohnheiten und Bedürfnisse des Anwenders anpassen.

Wurde ein strukturloser oder einfarbiger Bildbereich durch dessen Bewertung über einen Grenzwert ermittelt, wird dieser Bildbereich mit leicht erfassbaren Strukturen überlagert. Sofern der betreffende Bildbereich noch eine geringe Struktur und/oder Farbunterschiede aufweist, können diese als Vorlagen für die zu überlagernden Strukturen dienen. Dies kann durch Erhöhen des Kontrastes und/oder Verstärken der Farbunterschiede geschehen.

Sollten auch nach diesem Bearbeitungsschritt die Strukturen und/oder Farbunterschiede im Bild zu gering sein, erfolgt die Manipulation der strukturlosen Bildbereiche durch Überlagern künstlicher Strukturen. Diese künstlichen Strukturen können beispielsweise Streifen oder ein Raster sein.

Um dem Anwender ein intuitives Erfassen der Bewegung des Fahrzeugs zu ermöglichen, werden in einer bevorzugten Ausführungsform die Bewegungen des Fahrzeugs bestimmt und im manipulierten Bild auf die überlagerten künstlichen Strukturen übertragen.

Um das dargestellte manipulierte Bild so realistisch wie möglich und damit besonders leicht erfassbar zu machen, werden in einer bevorzugten Ausführungsform der Erfindung die künstlichen Strukturen in Form und Farbe natürlichen Strukturen nachempfunden. Typische natürliche Strukturen die sich dafür eignen sind Verschmutzungen der Straße, Fahrbahnmarkierungen, Streifen, Flecken und dergleichen, die ein Erkennen des Bewegungsflusses aus dem Monitorbild durch den Menschen ermöglichen. Die verwendeten Farben werden den jeweiligen Vorbildern nachempfunden, also beispielsweise weiß für Fahrbahnmarkierungen oder dunklere Grautöne für Flecken auf der Straße.

In einer weiteren bevorzugten Ausführungsform der Erfindung werden Bilder der Umgebung des Fahrzeugs aus mehreren Perspektiven erfasst und zu einem gemeinsamen Bild vereinigt. Dadurch wird das Blickfeld, welches vom Fahrer auf dem Monitor wahrgenommen wird, enorm erweitert und die Übersicht über die Umgebung des Fahrzeugs verbessert.

Ein weiterer Aspekt der Erfindung ist die Bereitstellung einer Vorrichtung zur Unterstützung eines Fahrers eines Fahrzeugs, umfassend Mittel zur Erfassung der Umgebung des Fahrzeugs, Mittel zur Bildverarbeitung und Bildmanipulation nach dem erfindungsgemäßen Verfahren sowie Mittel zur Anzeige eines Bildes der Umgebung.

Bevorzugt wird als Mittel zur Anzeige des Bildes der Umgebung ein Bildschirm eines Assistenzsystems und/oder Navigationsgeräts und/oder Bordcomputers verwendet. Da die meisten Fahrzeuge inzwischen mit einem Navigationsgerät oder Bordcomputer ausgerüstet sind, kann in der Regel auf einen eigenen, separaten Bildschirm verzichtet werden.

Die Mittel zur Erfassung der Umgebung des Fahrzeugs sind bevorzugt als Kameras ausgeführt. Besonders bevorzugt ist es, wenn das Fahrzeug über mehrere Kameras verfügt. Diese können insbesondere in kritischen Bereichen wie im Heck des Fahrzeugs oder an den Seiten angebracht sein.

### Vorteile der Erfindung

Das erfindungsgemäße Verfahren zur Erhöhung der Aufmerksamkeit eines Anwenders eines bildgebenden Assistenzsystems verbessert die intuitive Wahrnehmung von Bewegungen im dargestellten Bild der Umgebung des Fahrzeugs. Dies wird erreicht durch Manipulieren von strukturlosen Bereichen im erfassten Bild der Umgebung des Fahrzeugs. Bewegt sich das Fahrzeug beispielsweise rückwärts über einen dunklen Straßenbelag ohne Struktur, lässt sich die Bewegung des Fahrzeugs auf einem Kamerabild, welches nur die strukturlose Straße zeigt, nicht erkennen. Dadurch wird die Bewegung des Fahrzeugs vom Fahrer falsch eingeschätzt, wodurch sich kritische Fahrsituationen ergeben können.

Werden hingegen vom erfindungsgemäßen System und Verfahren künstliche Strukturen in das Bild eingebracht, kann der Anwender anhand der Relativbewegung der Strukturen seine Geschwindigkeit intuitiv korrekt einschätzen. Die Fahrsicherheit wird dadurch deutlich verbessert.

Bei dem erfindungsgemäßen Verfahren lässt sich der Grenzwert, ab dem eine Manipulation des Bildes erfolgt, durch den Anwender frei einstellen. Dadurch ist garantiert, dass das erfindungsgemäße System immer optimal an die Wünsche und Gewohnheiten des Anwenders angepasst ist.

Die intuitive Erfassbarkeit des Bildes durch den Fahrer wird weiter verbessert, indem die künstlichen Strukturen bevorzugt natürlichen Strukturen nachempfunden werden. Strukturen die wie Flecken oder Farbmarkierungen aussehen, werden intuitiv als zu der Straße gehörend wahrgenommen und deren Bewegung im Kamerabild auch sofort als Bewegung des Fahrzeugs interpretiert.

Da das auf dem Bildschirm angezeigte Bild vom Anwender zunehmend als Hauptschnittstelle zur Umgebung des Fahrzeugs verwendet wird, muss sichergestellt werden, dass der Fahrer die gesamte Umgebung wahrnehmen kann. Durch die bevorzugte Ausführungsform, bei der die Umgebung des Fahrzeugs über mehrere Kameras erfasst wird, und deren Bilder zu einem gemeinsamen Bild vereinigt werden, wird dies sichergestellt.

Des Weiteren lässt sich die erfindungsgemäße Vorrichtung zur Durchführung des Verfahrens leicht mit vorhandenen Assistenzsystemen, Navigationsgeräten oder Bordcomputern zu einem einheitlichen System verbinden, so dass kein weiterer Bildschirm erforderlich ist.

Kurze Beschreibung der Figuren
- Figur 1: zeigt ein Fahrzeug, welches rückwärts in eine Querparklücke einparkt,
- Figur 2a bis c: zeigt die Darstellung einer Rückfahrkamera nach dem Stand der Technik,
- Figur 2d bis f: zeigt die Darstellung einer Rückfahrkamera, welche nach dem erfindungsgemäßen Verfahren arbeitet,
- Figur 3: zeigt ein Fahrzeug, welches sich rückwärts einem Anhänger nähert und
- Figur 4a bis f: zeigt die Darstellung einer Rückfahrkamera während eines Annäherungsvorgangs an einen Anhänger, wobei die Figuren a bis c das Bild einer Rückfahrkamera nach dem Stand der Technik und die Bilder d bis f das Bild einer Rückfahrkamera das erfindungsgemäße Verfahren verwendend darstellen.

### Ausführungsformen der Erfindung

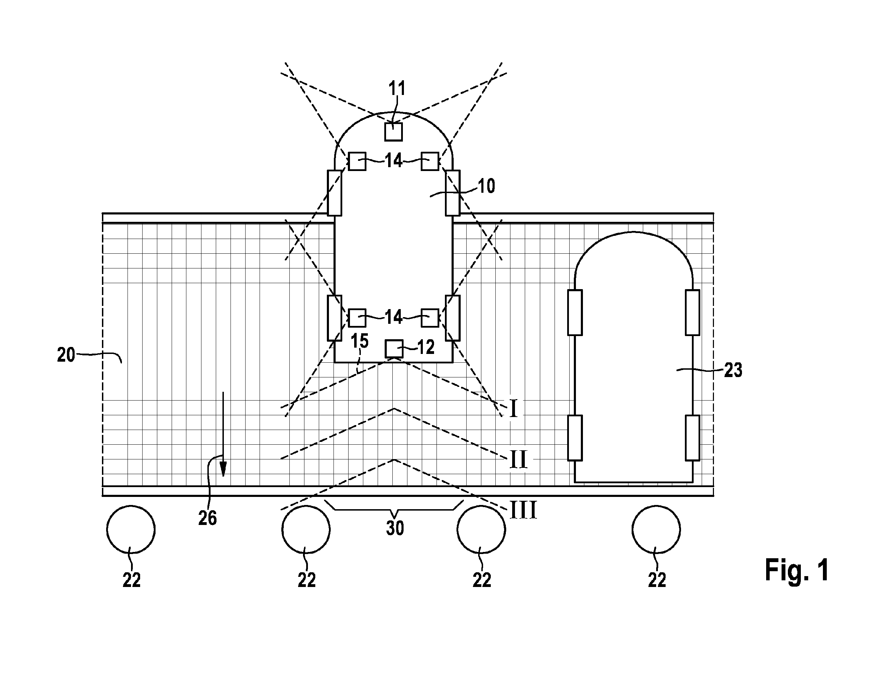

In Figur 1 ist ein Fahrzeug 10 dargestellt, welches in eine von einem parkenden Fahrzeug 23 und Pfosten 22 begrenzten Querparklücke 30 einparkt. Der Untergrund wird von einem Pflaster 20 gebildet, welches eine regelmäßige aber im Abbild einer Kamera nur schwach erkennbare Struktur aufweist. Das Fahrzeug 10 ist mit mehreren Kameras ausgerüstet, darunter eine Frontkamera 11, mehrere Seitenkameras 14 und eine Rückfahrkamera 12. Das Fahrzeug bewegt sich entlang des Pfeils 26 rückwärts in die Parklücke. Das Sichtfeld 15 der Rückkamera 12 ist in der Figur 1 zu drei verschiedenen Zeitpunkten, die mit den Bezugszeichen I bis III gekennzeichnet sind, dargestellt.

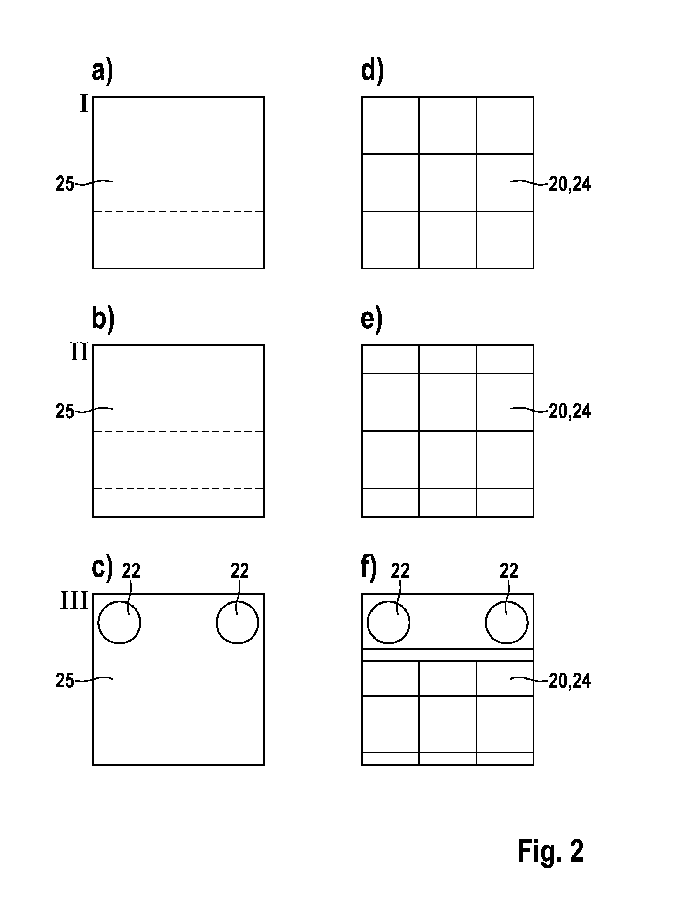

In Figur 2a bis c sind Bilder einer Rückfahrkamera nach dem Stand der Technik für drei mit den Bezugszeichen I bis III bezeichneten Positionen eines Fahrzeugs 10 in der Fahrsituation, wie sie in Figur 1 gezeigt ist, dargestellt.

Figur 2a zeigt das Fahrzeug 10 aus Figur 1 an der mit Bezugszeichen I bezeichneten Position. Das Sichtfeld 15 der Rückkamera 12 erfasst dabei nur einen Ausschnitt des Pflasters 20. Das Pflaster 20 weist zwar eine Struktur auf, die aber im erfassten Bild der Kamera nur als sehr geringer Farbunterschied dargestellt werden kann und durch den Fahrer fast nicht wahrnehmbar ist.

In Figur 2b wird das Sichtfeld 15 der Rückfahrkamera 12 an der Position II des Fahrzeugs 10 dargestellt. Wiederum befindet sich im Sichtfeld 15 der Kamera 12 nur das Pflaster 20. Da die Strukturen des Pflasters 20 auf dem Kamerabild für den Fahrer nicht wahrnehmbar sind, ergibt sich für den Fahrer das gleiche Bild wie in Figur 2a gezeigt, obwohl sich das Fahrzeug 10 weiterbewegt hat. Dabei besteht die Gefahr, dass der Fahrer die Bewegung des Fahrzeugs unterschätzt oder von einem Defekt des Kamerasystems ausgeht.

In Figur 2c ist das Sichtfeld 15 der Rückfahrkamera 12 an der mit III bezeichneten Position des Fahrzeugs 10 dargestellt. Das Sichtfeld 15 der Kamera 12 erfasst nun neben dem Pflaster 20 auch zwei der Pfosten 22. Erst ab diesem Zeitpunkt ist die Bewegung des Fahrzeugs 10 für den Fahrer aus dem dargestellten Kamerabild ersichtlich. Je nach Geschwindigkeit des Fahrzeugs 10 könnte dadurch eine gefährliche Fahrsituation entstehen.

In den Figuren 2d bis f sind die an den Positionen I bis III aufgenommenen Bilder der Rückfahrkamera 12 des Fahrzeugs 10 in der Fahrsituation, wie sie in der Figur 1 gezeigt wird, dargestellt.

In Figur 2d wird das Sichtfeld 15 der Rückfahrkamera 12 des Fahrzeugs 10 an der Fahrzeugposition, die mit dem Bezugszeichen I bezeichnet ist, gezeigt. Die Kamera 12 erfasst nur das Pflaster 20 bei dem das erfindungsgemäße Verfahren den gesamten Bildausschnitt als strukturlosen Bereich 25 identifiziert hat. Dem strukturlosen Bild wird eine Struktur 24 überlagert, die in dem dargestellten Beispiel durch Erhöhung des Kontrastes aus der vorhandenen Struktur des Pflasters 20 gewonnen wurde.

In Figur 2e ist das Sichtfeld 15 der Rückfahrkamera 12 des Fahrzeugs 10 an der Fahrzeugposition, die mit II gekennzeichnet ist, dargestellt. Wiederum wird von der Kamera 12 nur das Pflaster 20 erfasst, jedoch ist aufgrund der durch das erfindungsgemäße Verfahren eingebrachten Struktur 24, die gegenüber der Struktur 24 aus Figur 2d verschoben dargestellt ist, die Bewegung des Fahrzeugs 10 für den Fahrer deutlich zu erkennen. Dies ermöglicht es dem Fahrer die Geschwindigkeit seines Fahrzeugs intuitiv richtig einzuschätzen.

Figur 2f stellt das Bild der Rückfahrkamera 12 des Fahrzeugs 10 an der mit III bezeichneten Position des Fahrzeugs 10 dar. In dem Sichtfeld 15 der Kamera 12 befinden sich nun neben dem Pflaster 20 auch zwei der Pfosten 22. Der Bildbereich, in dem sich die Pfosten 22 befinden, weist genügend Strukturen auf und wird somit nicht vom erfindungsgemäßen Verfahren manipuliert. Lediglich in den strukturlosen Bildbereich 25 des Pflasters 20 werden die Strukturen 24 eingebracht, die dem Fahrer eine Einschätzung der Bewegung des Fahrzeugs erlauben.

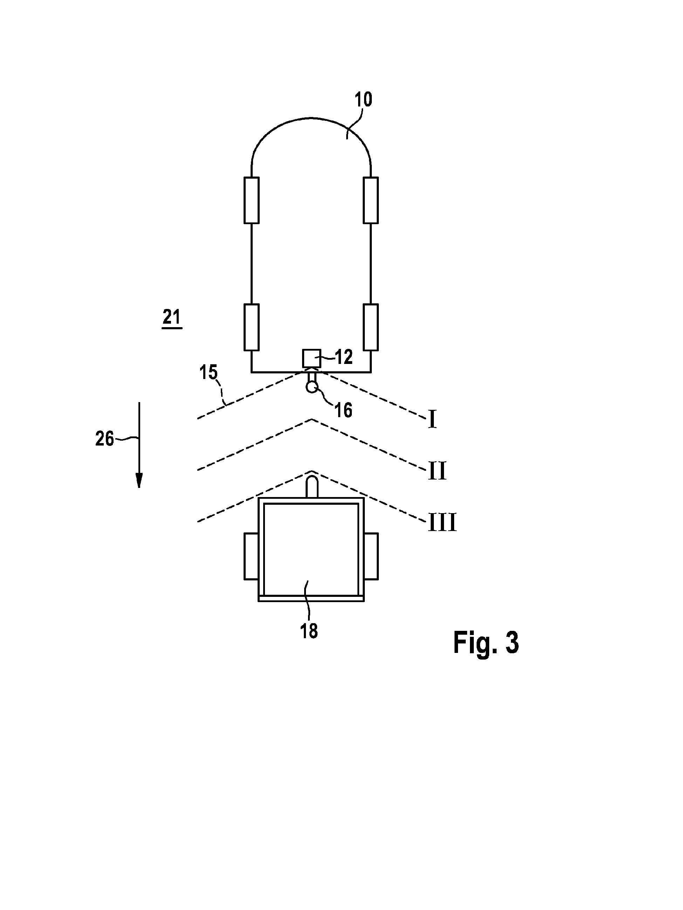

In Figur 3 ist das Fahrzeug 10 dargestellt, welches sich rückwärtsfahrend einem Anhänger 18 nähert. Das Fahrzeug 10 und der Anhänger 18 befinden sich beide auf einer Straße 21, welche keine bzw. nur sehr geringe Farbunterschiede und keinerlei Struktur aufweist. Das Fahrzeug 10 bewegt sich entlang der mit dem Bezugszeichen 26 versehenen Richtung auf den Anhänger 18 zu. Das Sichtfeld 15 der Rückfahrkamera 12 des Fahrzeugs 10 umfasst die Anhängerkupplung 16 des Fahrzeugs 10 und ist in Figur 3 für drei verschiedene Positionen des Fahrzeugs 10, welche mit dem Bezugszeichen I bis III bezeichnet sind, dargestellt.

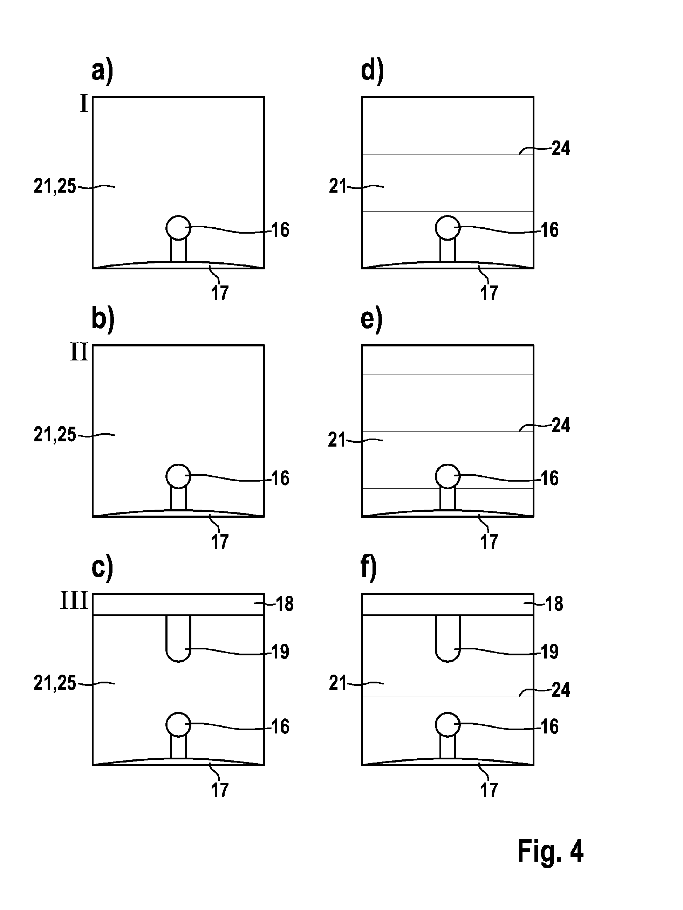

In den Figuren 4a bis c sind die Bilder einer Rückfahrkamera nach dem Stand der Technik eines Fahrzeugs 10 für die mit den Bezugszeichen I bis III bezeichneten Positionen des Fahrzeugs 10 der in Figur 3 gezeigten Fahrsituation dargestellt.

In Figur 4a ist das Bild der Rückfahrkamera 12 des Fahrzeugs 10 an der mit Bezugszeichen I bezeichneten Position des Fahrzeugs 10 dargestellt. Das Sichtfeld 15 der Kamera 12 erfasst die Straße 21 und ist so eingestellt, dass auch die Anhängerkupplung 16 des Fahrzeugs 10 sichtbar ist. Die Straße 21 weist im Wesentlichen nur eine einzige Farbe auf und zeigt keinerlei Struktur, die im Bild einer Kamera sichtbar wäre.

In Figur 4b ist das Bild der Rückfahrkamera 12 des Fahrzeugs 10 an der mit Bezugszeichen II bezeichneten Fahrzeugposition dargestellt. Obwohl sich das Fahrzeug 10 fortbewegt hat, sind die Figuren 4a und 4b identisch. Die strukturlose Straße 21 erlaubt es dem Fahrer nicht, die Bewegung des Fahrzeugs 10 einzuschätzen.

In Figur 4c ist das Bild der Rückfahrkamera 12 des Fahrzeugs 10 an der mit Bezugszeichen III bezeichneten Position des Fahrzeugs dargestellt. Vom Sichtfeld 15 der Kamera 12 wird nun auch der Anhänger 18 mit seiner Anhängerkupplung 19 erfasst. Erst jetzt ist es dem Fahrer möglich, die Bewegung seines Fahrzeugs aus dem Bild der Kamera zu erkennen.

Figuren 4d bis f zeigen Bilder der Rückfahrkamera 12 des Fahrzeugs 10, die mit dem erfindungsgemäßen Verfahren bearbeitet wurden.

Figur 4d zeigt das Bild der erfindungsgemäßen Rückfahrkamera 12 des Fahrzeugs 10 an der mit Bezugszeichen I bezeichneten Fahrzeugposition. Das Sichtfeld 15 der Kamera 12 erfasst die Straße 21 und die Anhängerkupplung 16 des Fahrzeugs 10. Durch das erfindungsgemäße Verfahren wurde die Straße 21 als strukturloser Bereich 25 eingestuft, der Bildbereich, der die Anhängerkupplung 16 und Teile des Fahrzeughecks 17 zeigt, hingegen nicht. Der strukturlose, die Straße 21 zeigende, Bildbereich wurde mit künstlich erzeugten Strukturen 24 überlagert. Die künstlichen Strukturen 24 sind in diesem Beispiel als Streifen ausgeführt.

Figur 4e stellt das Sichtfeld 15 der Rückfahrkamera 12 des Fahrzeugs 10 an der mit dem Bezugszeichen II gekennzeichneten Fahrzeugposition dar. Wiederum ist im Sichtfeld der Kamera 12 nur die Straße 21 und die Anhängerkupplung 16 des Fahrzeugs 10 zu erkennen. Die strukturlosen Bereiche 25 wurden wieder mit der künstlichen Struktur 24 überlagert, auf die die Bewegung des Fahrzeug 10 übertragen wurde. Die Positionen der durch das erfindungsgemäße Verfahren eingebrachten künstlichen Strukturen 24 sind gegenüber der Darstellung in der Figur 4d verschoben und erlauben dem Fahrer ein intuitives Erkennen der Bewegung des Fahrzeugs 10.

In Figur 4f ist das Sichtfeld 15 der Rückfahrkamera 12 des Fahrzeugs 10 an der mit dem Bezugszeichen III gekennzeichneten Fahrzeugposition dargestellt. Das Sichtfeld 15 der Rückfahrkamera 12 erfasst nunmehr neben der Straße 21 und der Anhängerkupplung 16 des Fahrzeugs 10 auch den Anhänger 18 und dessen Anhängerkupplung 19. Durch das erfindungsgemäße Verfahren wurde lediglich der Bereich des Bildes, der die Straße 21 zeigt, als strukturloser Bildbereich 25 eingestuft. Die künstlichen Strukturen 24 sind dementsprechend auch nur in diesem Bildbereich dem Bild überlagert. Wiederum ist die künstliche Struktur 24 gegenüber der Darstellung in Figur 4e verschoben, um den Fahrer ein Erkennen der Fahrzeugbewegung zu erleichtern. Die Annäherung des Fahrzeugs 10 an den Anhänger 18 kann durch den Einsatz des erfindungsgemäßen Verfahrens sicherer durchgeführt werden, da der Fahrer jederzeit in die Lage versetzt wird die Position und die Geschwindigkeit seines Fahrzeugs intuitiv zu erfassen.

## Patentansprüche

1. Verfahren zur Erhöhung der Aufmerksamkeit eines Anwenders eines bildgebenden Assistenzsystems, insbesondere für Anwendungen in einem Fahrzeug (10), folgende Verfahrensschritte umfassend:
a) Erfassen von Bildern der Umgebung des Fahrzeugs (10),
b) Erkennen und Bewerten von strukturlosen und/oder einfarbigen Bildbereichen (25) in den erfassten Bildern,
c) Manipulieren der strukturlosen Bildbereiche (25) durch Überlagern von leicht erfassbaren Strukturen (24), wenn deren Bewertung über einem Grenzwert liegt.

2. Verfahren nach Anspruch 1, **dadurch gekennzeichnet, dass** das Erkennen von strukturlosen Bildbereichen (25) mittels Histogrammanalyse, Kantendetektion, Vergleichen verschiedener Bildbereiche und/oder Regionen-basierenden Algorithmen erfolgt.

3. Verfahren nach Anspruch 1 oder 2, **dadurch gekennzeichnet, dass** der Grenzwert, ab dem eine Manipulation des Bildes erfolgt, durch den Anwender einstellbar ist.

4. Verfahren nach einem der Ansprüche 1 bis 3, **dadurch gekennzeichnet, dass** die leicht erfassbaren Strukturen (24) aus dem ursprünglichen Bild durch Erhöhen des Kontrastes gewonnen werden.

5. Verfahren nach einem der Ansprüche 1 bis 4, **dadurch gekennzeichnet, dass** die Manipulation der strukturlosen Bildbereiche (25) durch Überlagern künstlicher Strukturen (24) erfolgt.

6. Verfahren nach Anspruch 5, **dadurch gekennzeichnet, dass** die Bewegung des Fahrzeugs (10) bestimmt wird und im manipulierten Bild auf die überlagerten künstlichen Strukturen (24) übertragen wird.

7. Verfahren nach Anspruch 5 oder 6, wobei die künstlichen Strukturen (24) in Form und Farbe natürlichen Strukturen nachempfunden sind.

8. Verfahren nach einem der vorherigen Ansprüche, **dadurch gekennzeichnet, dass** Bilder der Umgebung des Fahrzeugs (10) aus mehreren Perspektiven erfasst und zu einem gemeinsamen Bild vereinigt werden.

9. Vorrichtung zur Unterstützung eines Fahrers eines Fahrzeugs (10), umfassend Mittel zur Erfassung der Umgebung des Fahrzeugs (10), Mittel zur Bildverarbeitung und Bildmanipulationen nach einem Verfahren der Ansprüche 1 bis 8 und Mittel zur Anzeige eines Bildes der Umgebung.

10. Vorrichtung nach Anspruch 9, wobei die Mittel zur Anzeige des Bildes der Umgebung ein Bildschirm eines Assistenzsystems und/oder Navigationsgerätes und/oder Bordcomputers ist.

11. Vorrichtung nach Anspruch 9 oder 10, wobei die Mittel zur Erfassung der Umgebung des Fahrzeugs (10) mindestens eine Kamera (11, 12, 14) umfassen.
